# EUROPÄISCHE PATENTSCHRIFT

(11) **EP 3 630 628 B1**
(45) Veröffentlichungstag und Bekanntmachung des Hinweises auf die Patenterteilung: **20.11.2024**
(21) Anmeldenummer: 18728369.2
(22) Anmeldetag: 30.05.2018
(51) Int. Cl.: B65C 9/00, B65G 29/00, B67B 3/00, B67C 3/22

(54) **BEHÄLTERBEHANDLUNGSMASCHINE SOWIE VERFAHREN ZUM BETRIEB EINER BEHÄLTERBEHANDLUNGSMASCHINE**
CONTAINER TREATMENT MACHINE AND METHOD FOR OPERATING A CONTAINER TREATMENT MACHINE
MACHINE DE TRAITEMENT DE CONTENANTS ET PROCÉDÉ DE FONCTIONNEMENT D'UNE MACHINE DE TRAITEMENT DE CONTENANTS

(30) Priorität: 02.06.2017 DE 102017112202
(43) Veröffentlichungstag der Anmeldung: 08.04.2020
(73) Patentinhaber: KHS GmbH, 44143 Dortmund (DE)
(72) Erfinder: SEEWALD-RAIDER, Alex, 55543 Bad Kreuznach (DE)
(86) Internationale Anmeldenummer: PCT/EP2018/064206
(87) Internationale Veröffentlichungsnummer: WO 2018/220026

(56) Entgegenhaltungen:
- EP-A1- 1 714 939
- EP-A1- 2 093 168
- EP-A1- 3 034 421
- DE-A1- 102013 204 461
- DE-U1- 202005 002 469
- DE-U1- 202005 002 470
- GB-A- 1 188 888

## Beschreibung

Die vorliegende Erfindung betrifft eine Behälterbehandlungsmaschine mit einer Antriebsvorrichtung zum rotierenden Antrieb eines Kreisels, an dem die zu behandelnden Behälter aufnehmbar sind. Die Erfindung betrifft auch ein Verfahren zum Betreib der Behälterbehandlungsmaschine.

Behälterbehandlungsmaschinen werden unter anderem zum industriellen Befüllen, Reinigen und Verschließen von Behältern, wie PET-Flaschen, verwendet. Bei solchen Anlagen wird eine höchstgenaue Übergabe beziehungsweise ein höchstgenauer Transport der Behälter angestrebt.

Aus der EP 3 034 421 A1 ist eine Behälterbehandlungsmaschine gemäß dem Oberbegriff des Anspruchs 1 umfassend ein um eine vertikale Achse rotierbares Karussell für die Handhabung von Gegenständen bekannt, das einen Stator und einen Rotor aufweist. Der Rotor hat einen Zahnkranz, der mit Ritzeln von am Stator angebrachten, zueinander beabstandeten Motoren angetrieben wird. Die Motoren können über eine Kontrolleinheit zur Beschleunigung oder Abbremsung des Karussells so geschaltet werden, dass ihre Drehmomente in die gleiche Richtung gerichtet sind, oder bei normalem Betrieb ihre Drehmomente in gegenläufiger Richtung gerichtet sind, wobei die Drehmomente immer auf einer konstanten Differenz gehalten werden. Dadurch ist das Karussell in seinen Einsatzmöglichkeiten eingeschränkt.

Aus der DE 10 2013 204 461 A1 ist eine Rundläufermaschine mit einem Karussell zur Förderung von Behältern in Behälteraufnahmen und einem Aggregat zur Behandlung und/oder Inspektion der Behälter bekannt geworden. Diese Rundläufermaschine zeichnet sich insbesondere dadurch aus, dass das Karussell mit einem Zahnrad verbunden ist, in das wenigstens zwei Antriebe über Ritzel eingreifen, und wobei eine Motorregelung in einem positionsgeregelten Betrieb des Karussells dazu ausgebildet ist, die Drehmomente der beiden Antriebe derart zu regeln, dass sie entgegengesetzt zueinander auf das Zahnrad wirken.

Antriebsmotoren in Stützstrukturen von Behandlungsanlagen zu integrieren ist beispielsweise aus den Druckschriften GB 1 188 888 A, EP 1 714 939 A1, DE 20 2005 002469 U1 oder DE 20 2005 002470 U1 bekannt.

Aus der DE 10 2012 000 881 A1 ist beispielsweise bereits eine Behälterbehandlungsmaschine bekannt, die zum Verschließen von Behältern verwendet wird. Diese Behälterbehandlungsmaschine verfügt über einen umlaufenden Kreisel zur Aufnahme und Behandlung der Behälter, eine ortsfeste sowie frei von Elementen zur mechanischen Leistungsübertragung ausgebildeten Zentralsäule zur Lagerung des Kreisels. Außenumfangsseitig ist am Kreisel ein Antrieb angebracht, der über ein Antriebsritzel eines Antriebsmotors in eine Außenverzahnung des Kreisels eingreift. Der Antriebsmotor ist als ein hinsichtlich des Nenndrehmoments überdimensionierter Servomotor ausgebildet. Der enorme Leistungsüberschuss des Servomotors ist für die Regelung der Anlage notwendig, um einen ausreichenden Synchronlauf zu erreichen. Der Servomotor ist dauerhaften Beschleunigungen und Verzögerungen ausgesetzt. Durch die ständige Drehfeldänderung in der Wicklung des Servomotors entsteht eine Induktionsspannung, die zur Erwärmung des Servomotors führt; der Leistungsüberschuss des Motors wird somit in Wärme umgewandelt. Um der enormen Trägheit des rotierenden Kreisels entgegen wirken zu können, muss der Servo-Läufer/Rotor eine gewisse Eigenträgheit aufbringen. Dies führt ebenfalls zu der oben angeführten Überdimensionierung des Servomotors.

Es ist die Aufgabe der vorliegenden Erfindung, die genannten Nachteile zu vermeiden.

Diese Aufgabe wird erfindungsgemäß durch eine Behälterbehandungsvorrichtung mit einer Antriebsvorrichtung mit den Merkmalen des Patentanspruchs 1 gelöst. Danach ist vorgesehen, dass zwei Antriebsritzel der beiden Motoren, beziehungsweise mit welchen die Motoren verbunden sind, jeweils mit der Verzahnung des Zahnkranzes des Kreisels kämmen - alternativ kann auch eine andere Verbindung zwischen Motoren beziehungsweise Antriebsritzeln auf der einen Seite und Zahnkranz auf der anderen Seite ausgebildet sein, beispielsweise ein zwischengeschalteter Zahnriemen. Die beiden Antriebsritzel wirken dabei an in Umfangsrichtung unterschiedlichen Stellen des Zahnkranzes mit diesem zusammen. Dadurch ist es möglich, geringer dimensionierte Motoren zu verwenden, als dies beim Stand der Technik mit einem Motor der Fall war; diese zwei Motoren können eine deutlich geringere Antriebsleistung aufweisen. Durch ein intelligentes Antriebskonzept kann dabei die Antriebsleistung und die Motorgröße halbiert werden. Außerdem kann die Behälterbehandlungsmaschine absolut spielfrei betrieben werden, ohne dass der Einsatz eines spielarmen Getriebes notwendig ist. Mittels der Erfindung sind Verschleiß und Lagerschäden messbar und das Nichtvorhandensein derselben können überwacht werden. Dadurch, dass der erste Motor in einer ersten Säule der Lagervorrichtung und der zweite Motor in einer zweiten Säule der Lagervorrichtung angeordnet ist, kann ein einfacher und raumsparender Aufbau der Behälterbehandlungsmaschine erreicht werden.

Eine vorteilhafte Weiterbildung der Erfindung sieht vor, dass die Motoren Servomotoren, Gleichstrommotoren, Synchronmotoren, Asynchronmotoren oder Torque-Motoren sind. Bevorzugt ist jeder der beiden Motoren ein Servomotor. Unter einem Servomotor wird ein einfacher Synchron- oder Asynchronmotor verstanden, der mit einem Sensor (Drehimpulsgeber) ausgestattet ist. Beispiele für Kombinationen verschiedener Motortypen sind: ein Servomotor als Bremsmotor und ein Gleichstrommotor als Antriebsmotor; ein Servomotor als Bremsmotor und ein Synchron- oder Asynchronmotor als Antriebsmotor; ein Servomotor als Bremsmotor und ein Torque-Motor als Antriebsmotor (wobei diese Kombination allerdings teuer ist). Unter einem Torque-Motor wird ein Servomotor mit vielen Polpaaren verstanden. Je mehr Polpaare (Wicklungen) man in solch einem Antrieb einsetzt, umso größer und schwerer wird dieser Antrieb. Theoretisch ist auch die Verwendung von zwei Torque-Motoren möglich; praktisch wird eine solche Variante jedoch kaum eingesetzt werden, da die Torque-Motoren in einem niedrigen Drehzahlbereich arbeiten und sich auch einzeln sehr gut regeln lassen.

Eine weitere vorteilhafte Weiterbildung der Erfindung sieht vor, dass die beiden Ritzel der Motoren auf einer Geraden, die einen Durchmesser der Verzahnung umfasst, angeordnet sind. Dadurch kann eine optimale Ausnutzung der Antriebsleistung der Motoren erzielt werden.

Eine Ausformung der Erfindung sieht vor, dass der Zahnkranz ein Außenzahnkranz ist.

Eine weitere vorteilhafte Weiterbildung der Erfindung sieht vor, dass es sich bei den Zahnverbindungen zwischen erstem Antriebsritzel und Verzahnung sowie zwischen zweitem Antriebsritzel und Verzahnung jeweils um geradverzahnte Kugeldrehverbindungen handelt. Dadurch ist keine hohe Verzahnungs-Qualität notwendig, um ausreichende Ergebnisse zu bekommen.

Eine weitere vorteilhafte Weiterbildung der Erfindung sieht vor, dass mindestens einer der Motoren oder deren Antriebsritzel über einen Zahnriemen mit dem Zahnkranz kraftübertragend verbunden ist. Dadurch kann mit einfachen Mitteln eine gute Kraftübertragung stattfinden. Insbesondere kann zwischen mindestens einem der Motoren und dem zugeordneten Antriebsritzeln ein Übergangsgetriebe, wie bspw. ein Planetengetriebe angeordnet sein.

Eine weitere vorteilhafte Ausführungsform der Behälterbehandlungsmaschine sieht vor, dass der erste Motor und/oder der zweite Motor eine Gruppe von zwei oder mehr Motoren darstellt, so dass durch drei oder mehr Motoren gemeinsam die rotierende Bewegung des Zahnkranzes und des Kreisels erfolgt.

Dabei sind die mindestens drei Motoren idealerweise unabhängig voneinander steuer- und/oder regelbar. Zusätzlich kann vorteilhafterweise vorgesehen werden, dass mindestens drei oder alle Motoren in den Säulen aufgenommen sind.

Des Weiteren wird die Aufgabe erfindungsgemäß durch ein Verfahren zum Betrieb einer Behälterbehandlungsmaschine mit den Merkmalen des Patentanspruchs 9 gelöst. Dadurch, dass bis zum Erreichen der Produktionsgeschwindigkeit bei Beschleunigung und Verzögerung des Kreisels die beiden Motoren gleichsinnig betrieben werden, steht permanent - bis die notwendige Produktionsgeschwindigkeit erreicht wird - die doppelte Antriebsleistung zur Verfügung. Dadurch, dass nach Erreichen der Produktionsgeschwindigkeit der zweite Motor in seinem Generatorbetrieb betrieben wird, kann dauerhaft eine Energierückgewinnung durch den zweiten Motor erreicht werden, was zur Reduktion der benötigten elektrischen Energie führt.

Eine vorteilhafte Weiterbildung der erfindungsgemäßen Verfahren sieht vor, dass während des Regelbetriebs der erste Motor nur für die Beschleunigung und der zweite Motor nur für die Verzögerung des Kreisels verwendet werden, wird erreicht, dass die beiden Motoren gegenüber einer ständigen Umpolung geschont werden. Außerdem wird eine erhöhte Wärmeproduktion der Motoren durch die Vermeidung ständiger Drehfeldänderungen vermieden.

Weitere Einzelheiten und Vorteile der Erfindung werden anhand eines in den Zeichnungen dargestellten Ausführungsbeispiels näher erläutert.

Es zeigen:
- Figur 1: eine schematische Schnittdarstellung einer erfindungsgemäßen Behälterbehandlungsmaschine,
- Figur 2: eine schematische Darstellung eines Teils der Behälterbehandlungsmaschine der Figur 1, schräg von unten gesehen,
- Figur 3: eine schematische Darstellung des Teils der Behälterbehandlungsmaschine aus Figur 2, schräg von oben gesehen,
- Figur 4: Beispiel eines Lastenverlaufs eines Servoantriebs gemäß dem Stand der Technik und
- Figur 5: Beispiel eines Lastenverlaufs der beiden Servomotoren gemäß der Erfindung.

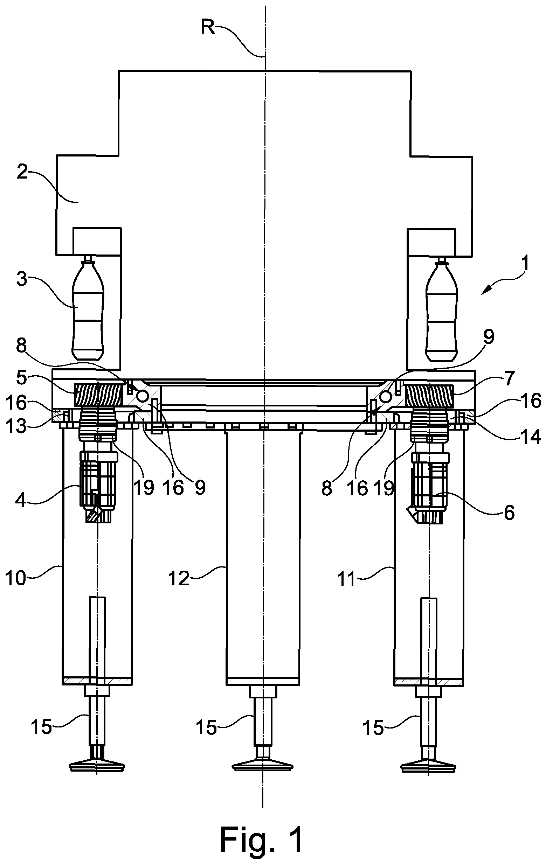

Figur 1 zeigt eine schematische Schnittdarstellung in der Seitenansicht eines Ausführungsbeispiels einer erfindungsgemäßen Behälterbehandlungsmaschine 1 mit einer erfindungsgemäßen Antriebsvorrichtung. Dort sind nur die Teile dargestellt, die für die erfindungsgemäße Antriebsvorrichtung und die erfindungsgemäßen Verfahren relevant sind. Die weiteren Teile der Behälterbehandlungsmaschine 1 sind dem Fachmann aus dem Stand der Technik bekannt und werden im Folgenden nicht näher erläutert. Im Folgenden werden als Motoren 4, 6 Servomotoren - dies ist die bevorzugte Ausgestaltung - beschrieben: der erster Motor 4 wird im Folgenden als erster Servomotor 4 und der zweite Motor 6 wird in Folgenden als zweiter Servomotor 6 bezeichnet. Mit den anderen oben genannten Elektromotorentypen ist das erfindungsgemäße Ausführungsbeispiel genauso realisierbar.

Die Behälterbehandlungsmaschine 1 weist einen statischen unteren Teil auf, der gegenüber einer (nicht dargestellten) Standfläche unbeweglich ist, und einen um eine Rotationsachse R rotierenden oberen Teil.

Der rotierende obere Teil weist einen Kreisel 2 auf, an dem Behälter 3 angebracht werden können und der diese bei seiner Rotationsbewegung mitnimmt. Am unteren Ende des Kreisels 3 ist ein kreisförmiger Zahnkranz 9 fest mit diesem verbunden und konzentrisch zur Rotationsachse R angeordnet.

Der statische untere Teil weist in seinem oberen Endbereich eine horizontal verlaufende Lagervorrichtung 8 auf. In der Lagervorrichtung 8 ist der Zahnkranz 9 des oberen Teils rotierbar gelagert. Die Lagervorrichtung 8 weist eine horizontal verlaufende, ringförmige Platte 16 mit einer zentralen Öffnung auf. Derartige Lagerungen sind dem Fachmann gut bekannt, so dass auf deren nähere Ausgestaltung hier nicht eingegangen wird.

Der untere Teil weist unterhalb der Lagervorrichtung 8 vier Säulen 10, 11, 12 auf, von denen in Figur 1 aufgrund der Schnittdarstellung nur drei zu sehen sind. An ihren unteren Enden weisen die Säulen 10, 11, 12 jeweils einen höhenverstellbaren Fuß 15 auf, so dass die Behälterbehandlungsmaschine 1 gegenüber der Standfläche ausgerichtet werden kann, indem die Längen der vier Füße 15 so angepasst werden, bis die gewünschte Ausrichtung der Behälterbehandlungsmaschine 1 gegenüber der Standfläche erreicht ist.

In zweien der Säulen 10, 11 sind Servomotoren 4, 6 angeordnet: in einer ersten Säule 10 ein erster Servomotor 4 und in einer zweiten Säule 11 ein zweiter Servomotor 6. Die Servomotoren 4, 6 sind zur Platzersparnis vertikal in den Säulen 10, 11 verbaut und weisen an ihren abtriebsseitigen Enden jeweils ein Antriebsritzel 5, 7 auf: ein erstes Antriebsritzel 5 ist dem ersten Servomotor 4 und ein zweites Antriebsritzel 7 ist dem zweiten Servomotor 6 zugeordnet. Die Servomotoren 4, 6 sind jeweils mittels geeigneter, dem Fachmann bekannter Verbindungsmittel fest mit der Lagervorrichtung 8 verbunden. Dabei sind die jeweiligen Motoreinheiten der Servomotoren 4, 6 unterhalb der ringförmigen Platte 16 der Lagervorrichtung 8 und die jeweiligen Antriebsritzel 5, 7 oberhalb dieser ringförmigen Platte 16 angeordnet. Um dies realisieren zu können, durchstößt der erste Servomotor 4 diese ringförmige Platte 16 im Bereich einer ersten Durchbrechung 13 und der zweite Servomotor 6 im Bereich einer zweiten Durchbrechung 14.

Die beiden Antriebsritzel 5, 7 sind in derselben Ebene wie der Zahnkranz 9 außerhalb desselben angeordnet und die Antriebsritzel 5, 7 bilden mit der Verzahnung des als Außenzahnkranz ausgebildeten Zahnkranzes 9 Zahnverbindungen, indem sie jeweils miteinander kämmen.

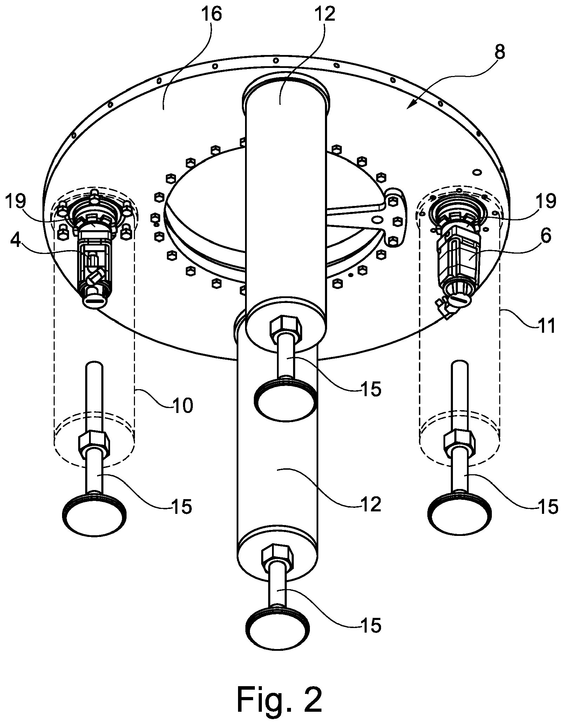

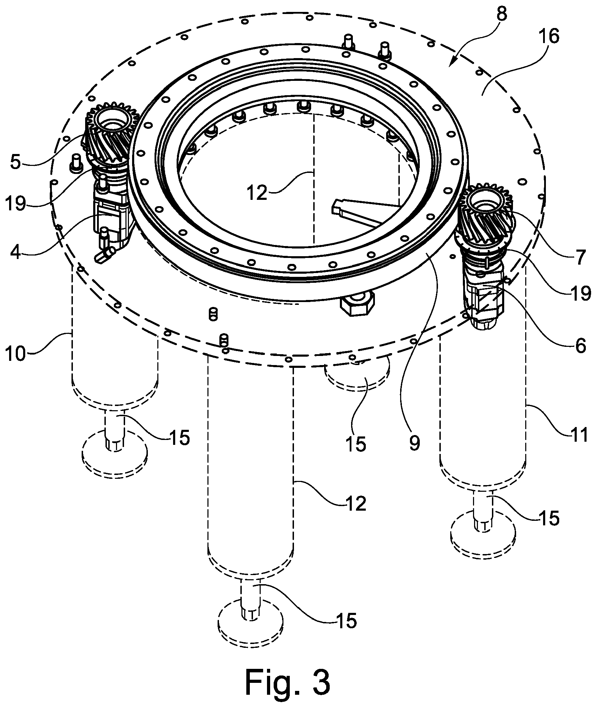

Zwischen den Servomotoren 4, 6 und den zugeordneten Antriebsritzeln 5, 7 ist jeweils ein Planetengetriebe 19 angeordnet, durch das die hohen Drehzahlen der Servomotoren 4, 6 so weit angepasst werden, dass die Antriebsritzel 5, 7 mit der Drehzahl rotieren, die für den Antrieb des Zahnkranzes 9 erforderlich ist. Die Planetengetriebe 19 sind auch in den Figuren 2 und 3 dargestellt, ohne dass in der folgenden Beschreibung hierzu noch einmal separat darauf eingegangen wird.

In Figur 2, die den unteren, statischen Teil der Behälterbehandlungsmaschine 1 schräg von unten zeigt, sind gut alle vier Säulen 10, 11, 12 mit ihren höhenverstellbaren Füßen 15 zu erkennen. Außerdem ist gut die Anordnung der Motoreinheiten der Servomotoren 4, 6 unterhalb der ringförmigen Platte 16 und die Befestigung der Servomotoren 4, 6 an der ringförmigen Platte 16 zu erkennen.

Figur 3 zeigt den unteren, statischen Teil der Behälterbehandlungsmaschine 1 samt Lagervorrichtung 8 und den auf dem statischen Teil montierte Zahnkranz 9, der zum oberen, rotierenden Teil der Behälterbehandlungsmaschine 1 gehört, schräg von oben. Es sind gut die beiden Antriebsritzel 5, 7 der beiden Servomotoren 4, 6 zu erkennen - ebenso die eigentlich von der ringförmigen Platte 16 und der ersten Säule 10 beziehungsweise der zweiten Säule 11 verdeckten Motoreinheiten der Servomotoren 4, 6. Das Kämmen der Antriebsritzel 5, 7 mit der Verzahnung des Zahnkranzes 9 ist nur schematisch dargestellt, wobei die Verzahnung des Zahnkranzes 9 und diejenige des zweiten Antriebsritzels 7 im Bereich seines Eingriffs in die Verzahnung des Zahnkranzes 9 weggelassen wurden.

Außerdem ist in Figur 3 gut zu erkennen, dass die beiden Antriebsritzel 5, 7 der Servomotoren 4, 6 so zu dem Zahnkranz 9 angeordnet sind, dass sie auf einer Geraden angeordnete sind, die einen Durchmesser des Zahnkranzes 9 umfasst. Sie sind somit weitest möglich voneinander entfernt am Zahnkranz 9 angeordnet.

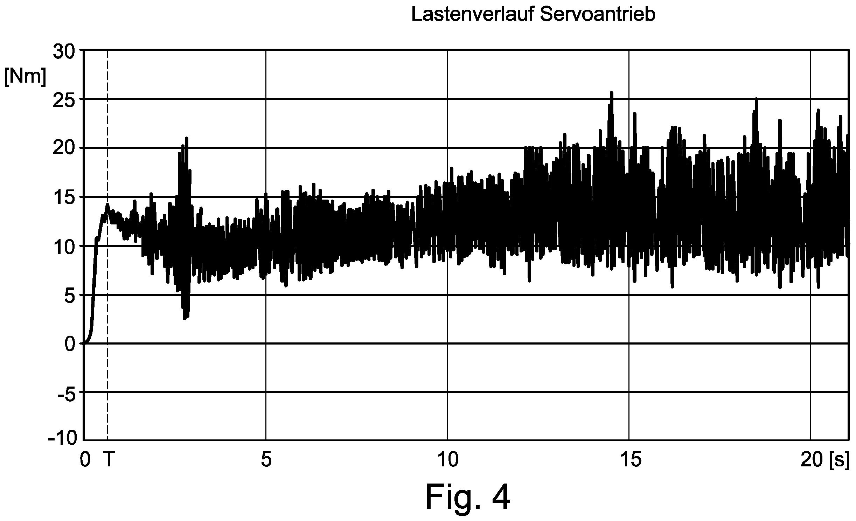

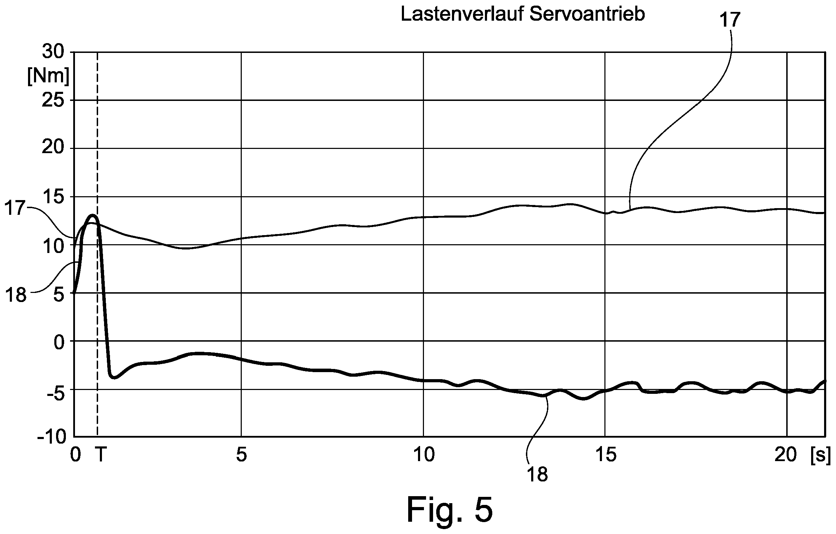

Im Folgenden wird die Funktionsweise der erfindungsgemäßen Antriebsvorrichtung nähe erläutert. Hierzu dient ein Vergleich der Lastenverläufe eines Servoantriebs gemäß dem Stand der Technik (siehe Figur 4) mit denjenigen der beiden Servomotoren 4, 6 gemäß dem erfindungsgemäßen Ausführungsbeispiel (siehe Figur 5):
Der Lastenverlauf des einzigen Servomotors gemäß dem Stand der Technik ist in Figur 4 dargestellt. Bis zum Zeitpunkt T, zu dem die Produktionsgeschwindigkeit erreicht wird - im dargestellten Beispiel ist das ungefähr 0,5 s nach Anlaufen des Servomotors der Fall -, steigt das Drehmoment rapide bis auf einen Wert von ungefähr 13 Nm an. Danach ist die Produktionsgeschwindigkeit erreicht und die Behälterbehandlungsmaschine muss so geregelt werden, dass die Vorgaben für die Produktionsgeschwindigkeit eingehalten werden. Hierfür wird der Servomotor ständig geregelt, so dass sein Drehmoment stark schwankt, was sich in der wilden Zackenbewegung des Graphen widerspiegelt, der ungefähr in einem Bereich zwischen 2,5 und 25 Nm verläuft. Die Regelung erfolgt so, dass bei jedem Hochpunkt eine Verzögerung und bei jedem Tiefpunkt eine Beschleunigung des Servomotors eingeleitet wird; der Servomotor ist somit dauerhaften Beschleunigungen und Verzögerungen unterworfen. Es wird ein Servomotor mit einem Nenndrehmoment von 37 Nm benötigt, obwohl das mittlere Drehmoment nur bei ca. 15 Nm liegt. Diese Überdimensionierung liegt auch daran, dass der Servo-Läufer eine gewisse Eigenträgheit aufweisen muss, um der enormen Trägheit des rotierenden Kreisels der Behälterbehandlungsmaschine entgegenwirken zu können.

Ganz allgemein kann in einer nicht dargestellten Variante mindestens in einer dritten Säule 12 ebenfalls ein Motor, insbesondere ein Servomotor, vorgesehen sein, der analog ein Antriebsritzel und den Zahnkranz antreibt. Der mindestens dritte Motor kann dann bedarfsweise im Antriebs- oder im Generatormodus betrieben werden, um gemeinsam mit den sonstigen mit dem Zahnkranz im Eingriff befindlichen Antriebsritzeln und deren Motoren diesen Zahnkranz anzutreiben.

Im Vergleich zu dem Diagramm der Figur 4 zeigt die Figur 5 die Lastenverläufe 17, 18 der beiden Servomotoren 4, 6 des erfindungsgemäßen Ausführungsbeispiels der Figuren 1 bis 3.

Der erste Servomotor 4 weist den ersten Lastenverlauf 17 und der zweite Servomotor 6 den zweiten Lastenverlauf 18 auf. Bis zum Zeitpunkt T, zu dem die Produktionsgeschwindigkeit erreicht wird und - wie in Figur 4 - ungefähr 0,5 s nach Anlaufen der beiden Servomotoren 4, 6 erreicht wird, steigen die Drehmomente rapide bis auf einen Wert von ungefähr jeweils 13 Nm an. Die beiden Servomotoren 4, 6 werden während dieses Zeitraumes gleichsinnig betrieben und ergänzen sich som it.

Nachdem die Produktionsgeschwindigkeit zum Zeitpunkt T erreicht wurde, wird der zweite Servomotor 6 in seinem Generatorbetrieb betrieben, so dass der ihm zugeordnete zweite Lastenverlauf 18 steil bis auf einen Wert von ungefähr -5 Nm abfällt. Mittels des zweiten Servomotors 6 wird somit Energie zurückgewonnen. Der erste Lastenverlauf 17, der dem ersten Servomotor 4 zugeordnet ist, schwingt dagegen leicht zwischen Werten von ungefähr 10 Nm und 14 Nm, ohne dass die aus dem Stand der Technik (siehe Figur 4) bekannten großen Ausschläge vorliegen.

Während des sich an den Zeitpunkt T anschließenden Regelbetriebs wird der erste Servomotor 4 nur für die Beschleunigung und der zweite Servomotor 6 nur für die Verzögerung des Kreisels 2 der erfindungsgemäßen Behälterbehandlungsmaschine 1 eingesetzt. Dies führt gemäß dem zweiten Lastenverlauf 18 dazu, dass sich das Drehmoment des zweiten Servomotors 6 ungefähr zwischen -6,5 Nm und -2 Nm bewegt. Weder der erste Lastenverlauf 17 noch der zweite Lastenverlauf 18 weisen die enormen Ausschläge auf, die der Lastenverlauf beim Stand der Technik gemäß Figur 4 zeigt. Es ist somit möglich, bei der erfindungsgemäßen Ausgestaltung Servomotoren 4, 6 mit deutlich niedrigem Nenndrehmoment zu verwenden - bei ansonsten gleichen Bedingungen -, die im Bereich von ungefähr 15 Nm liegen.

Der erste Servomotor 4 kann quasi als Antriebsmotor und der zweite Servomotor 6 kann quasi als Bremsmotor bezeichnet werden.

In einer alternativen, nicht gezeigten Ausführungsvariante kann vorgesehen werden, dass jedem Antriebsritzel 5, 7 ein eigener Zahnkranz 9 zugeordnet ist, wobei die Paarungen aus Antriebsritzel 5; 7 und Zahnkranz 9 unterschiedlich ausgeführt sein können, abhängig von der Hauptfunktion, die sie erfüllen sollen.

In einer alternativen, nicht dargestellte Ausführungsvariante der Vorrichtung und des Verfahrens ist mindestens einer der Motoren 4, 6 bzw. deren Antriebritzel 5, 7 über mindestens einen Riemen, idealerweise über mindestens einen Zahnriemen, kraftübertragend mit dem jeweiligen Zahnkranz 9 verbunden, wobei die sonstigen vorgenannten Aspekte in analoger Weise zur Anwendung kommen.

### Bezugszeichenliste

- 1: Behälterbehandlungsmaschine
- 2: Kreisel
- 3: Behälter
- 4: erster (Servo-)Motor
- 5: erstes Antriebsritzel
- 6: zweiter (Servo-)Motor
- 7: zweites Antriebsritzel
- 8: Lagervorrichtung
- 9: Zahnkranz
- 10: erste Säule
- 11: zweite Säule
- 12: weitere Säule
- 13: erste Durchbrechung
- 14: zweite Durchbrechung
- 15: Fuß
- 16: ringförmige Platte
- 17: erster Lastenverlauf
- 18: zweiter Lastenverlauf
- 19: Planetengetriebe

- R: Rotationsachse
- T: Zeitpunkt des Erreichens der Produktionsgeschwindigkeit

## Patentansprüche

1. Behälterbehandlungsmaschine (1) umfassend eine Antriebsvorrichtung, welche einen ersten Motor (4) und einen zweiten Motor (6) aufweist,
wobei der erste Motor (4) ein erstes Antriebsritzel (5) und der zweite Motor (6) ein zweites Antriebsritzel (7) aufweisen oder hiermit kraftübertragend verbunden sind,
wobei die beiden Motoren (4, 6) ortsfest zu einer Lagervorrichtung (8) angeordnet sind,
wobei in der Lagervorrichtung (8) ein Zahnkranz (9) mit einer kreisförmigen Verzahnung, der Teil eines Kreisels (2) ist, an dem Behälter (3) aufnehmbar sind, rotierbar um eine Rotationsachse (R) gelagert ist,
wobei jedes der beiden Antriebsritzel (5, 7) der Motoren (4, 6) mit der Verzahnung des Zahnkranzes (9) des Kreisels (2) kämmt oder eine andere Verbindung zwischen den Antriebsritzeln (5, 7) der Motoren (4, 6) und dem Zahnkranz (9) des Kreisels (2) ausgebildet ist und
die beiden Antriebsritzel (5, 7) der Motoren (4, 6) in Umfangsrichtung der Verzahnung zueinander beabstandet angeordnet sind,
**dadurch gekennzeichnet, dass**
der erste Motor (4) in einer ersten Säule (10) der Lagervorrichtung (8) und der zweite Motor (6) in einer zweiten Säule (11) der Lagervorrichtung (8) angeordnet ist.

2. Behälterbehandlungsmaschine (1) nach Patentanspruch 1, wobei die Motoren (4, 6) Servomotoren, Gleichstrommotoren, Synchronmotoren, Asynchronmotoren oder Torque-Motoren sind.

3. Behälterbehandlungsmaschine (1) nach einem der vorstehenden Patentansprüche, wobei die beiden Antriebsritzel (5, 7) der Motoren (4, 6) auf einer Geraden, die einen Durchmesser des Zahnkranzes (9) umfasst, angeordnet sind.

4. Behälterbehandlungsmaschine (1) nach einem der vorstehenden Patentansprüche, wobei es sich bei den Zahnverbindungen zwischen erstem Antriebsritzel (5) und Verzahnung sowie zwischen zweitem Antriebsritzel (7) und Verzahnung jeweils um geradverzahnte Kugeldrehverbindungen handelt.

5. Behälterbehandlungsmaschine (1) nach einem der vorstehenden Patentansprüche, wobei mindestens einer der Motoren (4, 6) oder deren Antriebsritzel (5, 7) über einen Zahnriemen mit dem Zahnkranz (9) kraftübertragend verbunden ist.

6. Behälterbehandlungsmaschine (1) nach einem der vorstehenden Patentansprüche, wobei mindestens zwischen einem der Motoren (4, 6) und den zugeordneten Antriebsritzeln (5, 7) ein Planetengetriebe (19) angeordnet ist.

7. Behälterbehandlungsmaschine (1) nach einem der vorstehenden Patentansprüche, wobei der erste Motor (4) und/oder der zweite Motor (6) eine Gruppe von zwei oder mehr Motoren darstellt.

8. Behälterbehandlungsmaschine (1) nach Anspruch 7, wobei mindestens drei Motoren unabhängig voneinander steuer- und/oder regelbar sind.

9. Verfahren zum Betrieb einer Behälterbehandlungsmaschine (1), wobei die Behälterbehandlungsmaschine (1) nach einem der vorangehenden Ansprüche 1 bis 8 ausgebildet ist, wobei vom Anlaufen bis zum Erreichen der Produktionsgeschwindigkeit bei Beschleunigung und Verzögerung des Kreisels (2) die beiden Motoren (4, 6) gleichsinnig betrieben werden und wobei nach Erreichen der Produktionsgeschwindigkeit der zweite Motor (6) in seinem Generatorbetrieb betrieben wird.

10. Verfahren nach Patentanspruch 9, wobei während des Regelbetriebs der erste Motor (4) nur für die Beschleunigung und der zweite Motor (6) nur für die Verzögerung des Kreisels (2) verwendet werden.

## Claims

1. Container treatment machine (1) comprising a drive device, which has a first motor (4) and a second motor (6), wherein the first motor (4) has a first drive pinion (5) and the second motor (6) has a second drive pinion (7), or are connected in a force-transmitting manner,
wherein the two motors (4, 6) are arranged in a fixed position relative to a bearing device (8),
wherein a ring gear (9) with a circular toothing and which is part of a gyroscope (2) on which containers (3) can be held is mounted in the bearing device (8) such as to rotate about a rotation axis (R),
wherein each of the two drive pinions (5, 7) of the motors (4, 6) mesh with the toothing of the ring gear (9) of the gyroscope (2), or another connection is formed between the drive pinions (5, 7) of the motors (4, 6) and the ring gear (9) of the gyroscope (2), and
the two drive pinions (5, 7) of the motors (4, 6) are arranged spaced apart from one another in the circumferential direction of the toothing,
**characterised in that**
the first motor (4) is arranged in a first column (10) of the bearing device (8) and the second motor (6) is arranged in a second column (11) of the bearing device (8).

2. Container treatment machine (1) according to claim 1, wherein the motors (4, 6) are servomotors, DC motors, synchronous motors, asynchronous motors, or torque motors.

3. Container treatment machine (1) according to any one of the preceding claims, wherein the two drive pinions (5, 7) of the motors (4, 6) are arranged on a straight element which comprises a diameter of the ring gear (9).

4. Container treatment machine (1) according to any one of the preceding claims, wherein the toothed connections between the first drive pinion (5) and toothing, and between the second drive pinion (7) and toothing are in each case straight-toothed ball slewing rings.

5. Container treatment machine (1) according to any one of the preceding claims, wherein at least one of the motors (4, 6) or its drive pinion (5, 7) is connected in a force-transmitting manner to the ring gear (9) by means of a toothed belt.

6. Container treatment machine (1) according to any one of the preceding claims, wherein a planetary gear (19) is arranged at least between one of the motors (4, 6) and the drive pinion (5, 7) assigned to it.

7. Container treatment machine (1) according to any one of the preceding claims, wherein the first motor (4) and/or the second motor (6) represents a group of two or more motors.

8. Container treatment machine (1) according to claim 7, wherein at least three motors can be controlled and/or regulated independently of one another.

9. Method for operating a container treatment machine (1), wherein the container treatment machine (1) is formed in accordance with any one of the preceding claims 1 to 8, wherein, from the run-up until attaining production speed, during the acceleration and deceleration of the gyroscope (2), both motors (4, 6) are operated equidirectionally, and wherein, after attaining production speed, the second motor (6) is operated in its generator mode.

10. Method according to claim 9, wherein, during regular operation, the first motor (4) is used only for the acceleration of the gyroscope (2), and the second motor (6) is used only for its deceleration.

## Revendications

1. Machine de traitement de récipients (1) comprenant un dispositif d'entraînement qui possède un premier moteur (4) et un deuxième moteur (6), le premier moteur (4) ayant un premier pignon d'entraînement (5) et le deuxième moteur (6) ayant un deuxième le pignon d'entraînement (7) ou étant relié à lui de manière à transmettre la force,
les deux moteurs (4, 6) étant agencés de manière stationnaire dans un dispositif de stockage (8),
une couronne dentée (9) à dents circulaires, qui fait partie d'un gyroscope (2) sur lequel des récipients (3) peuvent être insérés, étant montée rotative dans le dispositif de stockage (8) autour d'un axe de rotation (R),
chacun des deux pignons d'entraînement (5, 7) des moteurs (4, 6) engrenant les dents de la couronne dentée (9) du gyroscope (2) ou une autre liaison étant réalisée entre les pignons d'entraînement (5, 7) des moteurs (4, 6) et la couronne dentée (9) du gyroscope (2) et
les deux pignons d'entraînement (5, 7) des moteurs (4, 6) étant agencés à une distance l'un de l'autre dans la direction périphérique des dents,
**caractérisée en ce que**
le premier moteur (4) est agencé dans une première colonne (10) du dispositif de stockage (8) et le deuxième moteur (6) est agencé dans une deuxième colonne (11) du dispositif de stockage (8).

2. Machine de traitement de récipients (1) selon la revendication 1, les moteurs (4, 6) étant des servomoteurs, des moteurs à courant continu, des moteurs synchrones, des moteurs asynchrones ou des moteurs couple.

3. Machine de traitement de récipients (1) selon l'une des revendications précédentes, dans laquelle les deux pignons d'entraînement (5, 7) des moteurs (4, 6) sont agencés sur une droite qui inclut un diamètre de la couronne dentée (9).

4. Machine de traitement de récipients (1) selon l'une des revendications précédentes, dans laquelle les liaisons dentées entre le premier pignon d'entraînement (5) et les dents et entre le deuxième pignon d'entraînement (7) et les dents sont chacune des couronnes d'orientation à billes dentées droites.

5. Machine de traitement de récipients (1) selon l'une des revendications précédentes, dans laquelle au moins un des moteurs (4, 6) ou ses pignons d'entraînement (5, 7) sont reliés à la couronne dentée (9) par une courroie dentée de manière à transmettre la force.

6. Machine de traitement de récipients (1) selon l'une des revendications précédentes, dans laquelle un engrenage planétaire (19) est agencé au moins entre l'un des moteurs (4, 6) et les pignons d'entraînement associés (5, 7).

7. Machine de traitement de récipients (1) selon l'une des revendications précédentes, dans laquelle le premier moteur (4) et/ou le deuxième moteur (6) représentent un groupe de deux moteurs ou plus.

8. Machine de traitement de récipients (1) selon la revendication 7, dans laquelle au moins trois moteurs peuvent être commandés et/ou réglés indépendamment les uns des autres.

9. Procédé pour faire fonctionner une machine de traitement de récipients (1), la machine de traitement de récipients (1) étant conçue selon l'une des revendications 1 à 8 précédentes, les deux moteurs (4, 6) fonctionnant dans le même sens depuis le démarrage jusqu'à ce que la vitesse de production soit atteinte pendant l'accélération et la décélération du gyroscope (2) et le deuxième moteur (6) fonctionnant en mode générateur après avoir atteint la vitesse de production.

10. Procédé selon la revendication 9, dans lequel, pendant le fonctionnement régulier, le premier moteur (4) est utilisé uniquement pour accélérer et le deuxième moteur (6) est utilisé uniquement pour décélérer le gyroscope (2).
